# EUROPEAN PATENT APPLICATION

(11) **EP 1 679 256 A2**
(43) Date of publication of application: **12.07.2006**
(21) Application number: 05026410.0
(22) Date of filing: 03.12.2005
(51) Int. Cl.: B62M 23/02

(54) **System of sensors for electric bicycle with assisted pedal stroke**

(30) Priority: 11.01.2005 IT BO20050008
(71) Applicant: Tecnocarbur s.a.s. di de Concini M. & Co., 39100 Bolzano (IT)
(72) Inventor: De Concini, Maurizio, 39100 Bolzano (IT)
(74) Representative: Rinaldi, Carlo

(57) **Abstract**

A system of sensors for electric bicycle with modular and expansible assisted pedal stroke in function of the necessities and sophistication of the required control for the bicycle consists of at least a sensor, integral with the freewheel, said sensor sensing the rotation caused by the pedals acting on the freewheel by means of the chain or the stopping of the freewheel caused by the stopped drive of the pedals, supplying, in such way, to the control central unit the informing criterion for allowing the beginning, the continuation or cessation of the propulsive contribution of an auxiliary electric motor.

## Description

### BACKGROUND OF THE INVENTION

The definition "electric bicycles with assisted pedal stroke" defines the bicycles equipped with an auxiliary electric motor with limited power and fed by batteries. In any operating condition the auxiliary motor can deliver its propulsive contribution only when the driver acts on the pedals or on the analogous devices transmitting the muscular force in the usual and typical way of the original vehicle, allowing, therefore, the practical of the so-called assisted propulsion and, in the specific case of the bicycles, carrying out the function of the assisted pedal stroke.

Said auxiliary motor can be mounted on the hub of the rear wheel. This solution is remarkably more frequent; the motor can be mounted also on the hub of the front wheel, but this solution is very rare. In addition, examples are known of several mounting of the motor not axial with respect to the hubs of the wheels.

In order to avoid a legal approval, as for motor vehicles, said electric bicycles with assisted pedal stroke must comply with specified criteria and standard requirements as follows:
1. Limit of the maximum power delivered by the electric motor.
2. Compulsory limit of speed; when this limit is reached the power delivered to the motor must be stopped.
3. The beginning of the delivering of power by the auxiliary electric motor must occur only when the cyclist has begun to pedal
4. The delivery of the electric power stops within a pre-established distance as soon as the cyclist stops to pedal.

Moreover, for safety reasons, it is required as follows:
5. The motor must be stopped immediately when the brakes of the electric bicycle are used.

In compliance with the above legal requirements a control central unit can be used, for all or only some points b), c), d) and e), the control central unit being duly controlled by proper sensors sensing the using condition of the electric bicycle.

In case the control central unit does not control the limit of point a), the motor, due to its intrinsic feature, provides to limit the power.

The point d) consists in acting the brakes by proper sensors.

### PRIOR ART

A large range of systems is known which comply, more or less exactly, with the requirements of the points b), c) and e) essentially based on sensors sensing the rotation and/or the torque on the pedals or the rotation and/or the beginning of the tension of the chain. In addition, known devices are provided to meet the requirement of the point e), said devices being acted by the control means of the brakes.

The above systems, particularly the ones sensing the torque on the pedals or the tension of the chain instead of the simple rotation of the pedals, are delicate and sensitive to accidental less of calibration. Moreover, the systems sensing only the rotation of the pedals are essentially slack in allowing the action of the motor because of the need to recognise the rotation direction of the pedals as cyclist's will to advance the bicycle.

Said systems are more or less capable of reaching their purpose only when the rotational ratio of the pedals and rear wheel is constant, in order to assure the repeatability of the motor operations.

### AIMS AND FEATURES OF THE INVENTION

The purpose of the invention is to remedy to the above limits and inconveniences. The invention, as claimed, solves the problem of creating a combination capable of overcoming the difficulties of the known systems by using a system of sensors being modular and extendable according to the needs and complexity of control in order to overcome the problems of the above mentioned systems.

The system is modular since it can use one or more sensors with the same feature; it is extendable according to the needs since it is capable, by using contemporaneously more sensors, of controlling progressively with more accuracy.

The system of sensors can be usefully and easily used by any mounting of the motor, which has been previously described.

Also the easiest embodiment of the system having only a sensor assures motor operations with the same readiness, aside from a gearbox.

All sensors have the same technology. An embodiment consists of a Hall effect sensor faced to a phonic wheel with permanent magnets.

The invention essentially consists in the proper and original configuration of the sensors.

The advantages of the different sensors, singularly or in combination considered, are here following listed:
2. A first sensor integral with the freewheel, Hall effect sensor fixed to the frame and faced to the phonic wheel which rotates with the rear axis of the bicycle. Said first sensor, therefore, senses a signal only when the freewheel rotates and it is capable of finding the rotation direction with a proper decoding of the signal. This rotation, in its turn, can be caused only by the cyclist's pedal stroke. The pedal stroke and the correspondence with the advancement direction of the bicycle, and the continuity as well, or immediately, the eventual stopping of the pedal stroke are sensed. The univocal criterion to begin, maintain or stop the delivering of power of the electric motor, according the requirements by the rule of point c) e d) is observed by the control central unit in this way.
   The described positioning of the sensor allows recognising the pedal stroke direction with an always equal resolution relatively to the distance covered by the bicycle, independently from the ratio of transmission between the crown rotating with the pedals and the freewheel, contrarily to how it would occur with a sensor that is found, as usually it occurs, the rotation of the pedals.
   Using only this sensor, the control of the legally permissible maximum speed, and the control of the legally maximum delivered power must be realised by intrinsic limits of the working characteristics of the motor. Advantageously, the stopping of the delivering of the motor power, when the cyclist stops to pedal, must occur within a time not exceeding the legal limit of distance compelled by the rules.
3. The sensor according to the invention is placed on a wheel of the bicycle and a Hall effect sensor faced to the phonic wheel integral with said wheel of the bicycle. In this way, the sensor senses the covered distance and the real speed of the electric bicycle, for any used system of propulsion: only muscular, or compound electric and muscular.
   Particularly, In particular, the compound use of signals coming from the sensors i) and ii) allows to set up a strategy of control of the delivering of the motor power based on the permissible sliding between signal of freewheel i) and that one of wheel II).
   More particularly the compound use of the signals coming from the sensors i) and ii) allows of modulating the operating of the motor in any appropriated way in function of the speed and the distance covered by the bicycle. Therefore, the use allows to stop the delivering of the electric power, when the legal limit of speed s attained, by operating a graduated lessening of the contribution of the motor when the same limit approximates. It assures, moreover, the stopping of power delivering at the stop of the assisted pedal stroke within a pre-established covered distance and measured directly by the sensor ii). It is, therefore, independent from the ratio of transmission between the crown and the freewheel.
   The contemporaneous use of both sensors i) and ii) assures, together with proper processing logic, an extensive and optimal control of a bicycle with assisted pedal stroke, with gearbox with some velocity ratios.

The use of the information about the speed coming from the sensor ii) joined to a proper mapping of the characteristics of the electric motor stored in the electronic control unit in function of the speed and current absorption, always allows the active programming of the delivering of the same motor and its exploitation towards the maximum limit of legally permissible power.
4. Sensor on central movement with Hall effect sensor fixed to the frame faced to the phonic wheel. Said phonic wheel is rotated by the pedal mechanism for sensing the pedal speed of rotation, which, because of the use of variable ratios of transmission between the crown and the freewheel, does not depend on the speed of the freewheel. The criterion of pedal speed of rotation can usefully be used in order to allow that, by means of the use of a automatic gearshift with commercial technology, the assisted pedal stroke speed can eventually be maintained within comfortable limits also for a subjective choice defined by proper and known means in the electronic control unit.

The compounded use of the three described sensors allows, therefore, to assure an optimised management of the motor contribution, within the enforced regulations and compounded with the maximum flexibility and comfort of personalised use, by opening also a new innovative range of control logic.

### BRIEF DESCRIPTION OF THE DRAWINGS

Other advantages, features and aims of the invention, may be more readily understood by referring to the accompanying drawings, which concern preferred embodiments, in which:
Fig. 1 shows the schematic positioning of the sensor (i) integral with the freewheel transmitting the movement to rear wheel, on hub of which it is splined;
Fig. 2 represents a schematic view from the side opposite to the freewheel of the rear hub where a possible positioning of the sensor (ii) integral with the same hub of the rear wheel can be sight by which it is rotated;
Fig. 3 shows the schematic positioning of the sensor (iii) integral with the pedals, by which it is rotated.

### DESCRIPTION OF A PREFERRED EMBODIMENT OF THE INVENTION

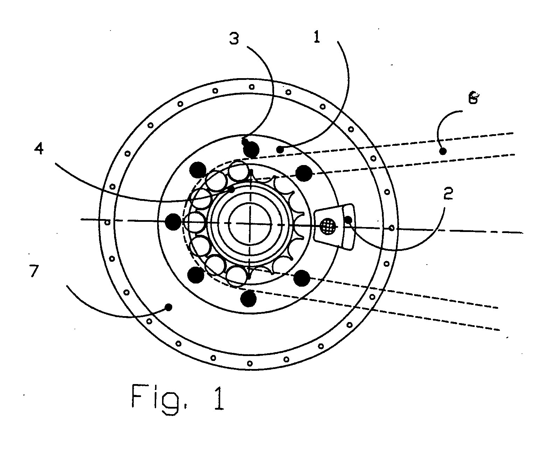

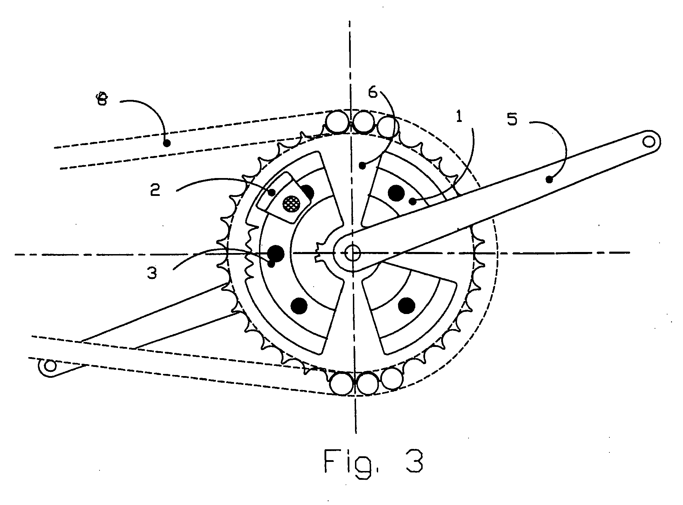

Fig. 1 represents a part of a known kinematic motion of the bicycle with the freewheel 4, which only when the pedals 5 of Fig. 3 are acted is rotated by the stretch of the transmission chain 8, the pedals being integral with the crown 6. The freewheel 4 rotates the phonic wheel 1 presenting the small permanent magnets 3 placed in sequence in front the Hall effect sensor sensing their passage and, therefore, the movement of the freewheel 4. It is to be noticed that the freewheel 4 rotates only when the pedals are acted, and stops when the pedal are stopped. Also a motor 7 is provided, integral with the hub of the rear wheel, said motor 7 is controlled by the control central unit in function the processing of the signal of system sensors.

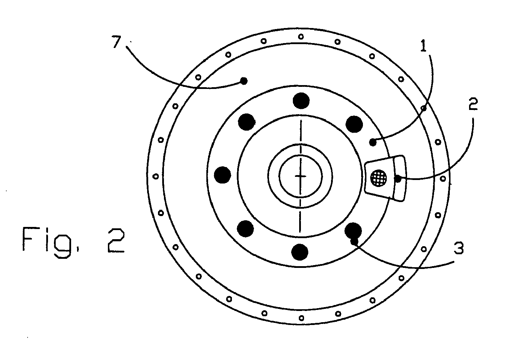

Fig. 2 represents the second sensor of system (ii) with the phonic wheel 1 integral with the hub rotating said phonic wheel 1 together with the rear wheel of the bicycle. The Hall effect sensor 2 of Fig. 2 senses the passage of the permanent magnets 3 sending an univocal signal to the electronic central unit, said univocal signal indicating the covered distance and the speed of the bicycle. The figures disclose how this sensor consists of the same constructive elements of the sensor (i) of Fig. 1.

Fig. 3 shows a sensor, which can be identical to the previous ones, with the phonic wheel 1 integral with the pedals 5 and the crown 6. The sensor 2, in this systemic context, supplies to the electronic central unit the criterion of rhythm of the pedal stroke, independently from the ratio of transmission between the crown 6 of Fig. 3 and freewheels 4 of fig. 1.

The described figures refer to a simple not limiting constructive embodiment regarding different configurations and working parameters. For example, a motor integral with the hub of the front wheel, or however placed on the electric bicycle provided that it is controlled, by means of the control central, by the above mentioned sensors, or different positioning of the sensor (ii) provided integral with the motion of one whichever of the two wheels (front or rear).

## Claims

1. System of sensors for electric bicycle with assisted pedal stroke, the system being modular and expansible in function of the necessities and sophistication of the required control for the bicycle,
the system being **characterised by** the fact that comprises at least a sensor integral with the freewheel by means of the chain, said sensor being capable of sensing the rotation due to the pedals or the stopping of the freewheel caused by the stopped drive of the pedals, supplying, in such way, to the control central unit the informing criterion for allowing the beginning, the continuation or cessation of the propulsive contribution of an auxiliary motor.

2. Sensor as in claim 1, used in presence of a device with manual control capable of modifying the ratio of transmission between the crown, integral with the pedals, and wheelworks of the freewheel on the axis of the rear wheel.

3. System of sensors for electric bicycle with assisted pedal stroke, the system being modular and expansible in function of the necessities and sophistication of the required control for the bicycle,
the system being **characterised by** the fact that a second sensor is provided capable of sensing the rotation of one of the two wheels of the bicycle,
said second sensor, in combination with the signals coming from the first sensor, defining the informing criterion of one any logic of control of the electric bicycle.

4. Combination of sensors as in claim 3, wherein theirs signals constitute the information used by the control central unit in for processing a logic of control based on the sliding or difference of angular velocity between the freewheel, on which the first sensor is applied to and speed of the wheel to which the second sensor is applied.

5. Combination of sensors as in claim 3, wherein theirs signals are used to allow the active control of the power delivered by the motor within the prescribed limits in any way or according to a characteristic stored inside the control central unit with or without use of eventual other parameters noticeable directly inside the control central unit.

6. System of sensors for electric bicycle with assisted pedal stroke, the system being modular and expansible in function of the necessities and sophistication of the required control for the bicycle, as in claim 3,
wherein a third sensor is provided capable of sensing the rotation of the pedals and in combination with signals from the free wheel on the rear axle and of those of a wheel of the bicycle it is used in order to concur with the cyclist to personalise at its pleasure the pedal stoke rhythm, so that the control central unit controls a device for changing the ratio of transmission with electrical worker so as to allow to the same cyclist to automatically maintain within a reasonably narrow range the pre-established rhythm of the pedal stroke.
